# EUROPEAN PATENT APPLICATION

(11) **EP 2 728 657 A1**
(43) Date of publication of application: **07.05.2014**
(21) Application number: 12191089.7
(22) Date of filing: 02.11.2012
(51) Int. Cl.: H01M 8/24

(54) **Fuel cell system**

(71) Applicant: BankWare Ltd., 1527 Sofia (BG)
(72) Inventor: Petkanchin, Lachezar Lazarov, 1527 Sofia (BG)
(74) Representative: Müller Schupfner & Partner Patent- und Rechtsanwaltspartnerschaft mbB

(57) **Abstract**

Fuel cell system, comprising a plurality of layers and a channel system, wherein each layer contains at least two fuel cells, wherein the channel system contains at least one supply unit that is attributed to each layer, wherein the supply unit is adapted to supply reactant media to the at least two fuel cells and to guide reactant media from an inlet to an outlet, wherein the at least two fuel cells are arranged in series along the at least one supply unit and wherein the supply units of the layers are connected in such manner that reactant media can flow in series from one layer to another and/or to the outlet.

## Description

This invention relates to a fuel cell system for generating electrical energy and a method for operating a fuel cell system.

Several different designs of fuel cell systems are known from the prior art. The most common form of fuel cell systems shows a vertical or bipolar plate stacking. Bipolar stacking is similar to how batteries are stacked on top of one another, for example in a flash light. Planar interconnection designs have recently been explored as alternatives to vertical stacking. In planar configurations, cells are connected laterally rather than vertically. Also for the flow structure design, a lot of different possibilities exist, for example parallel, serpentine or mixed versions. Independent of the exact design, it is a fact that the fuel is used up along the flow channels. If the fuel is for example hydrogen, it results in a lower partial pressure along the flow channel. If the partial pressure of a reactant drops, then the operating voltage of the cell also drops. As a consequence, internal currents will exist in the electrodes. The efficiency drops and reverse reactions will occur in parts of the fuel cell, because of working as an electrolytic cell.

Therefore, it is an object of the current invention to provide a fuel cell system and a method for operating a fuel cell system, which will reduce internal currents in the electrodes of the fuel cell and provide a better power-output flexibility.

This object is achieved by means of a fuel cell system according to claim 1 and a method according to claim 10. Additional advantages and features of preferred embodiments of the current invention are defined in the dependent claims.

According to the invention, there is provided a fuel cell system, comprising a plurality of layers and a channel system, wherein each layer contains at least two fuel cells, wherein the channel system contains at least one supply unit that is attributed to each layer, wherein the supply unit is adapted to supply reactant media to the at least two fuel cells and to guide reactant media from an inlet to an outlet, wherein the at least two fuel cells are arranged in series along the at least one supply unit and wherein the supply units of the layers are connected in such manner that reactant media can flow in series from one layer to another and/or to the outlet. The at least two fuel cells are devices that convert chemical energy from a fuel into electricity through a chemical reaction with oxygen or another oxidizing agent. The fuel and the oxygen respectively the other oxidizing agent constitute the reactant media. They are brought to the fuel cells of the layer via the supply unit. For this reason the supply unit consists preferably of a supply channel respectively supply channels. So a direction of the supply unit respectively the supply channel(s) defines a flow direction (for the fuel and the oxidizing agent/oxidant) that is oriented approximately parallel to the layer. Hydrogen is the most common fuel, but hydrocarbons, such as natural gas and alcohols like for example methanol etc. are also used. The basic setup of the at least two fuel cells respectively for a fuel cell in general is always similar. Every fuel cell has electrodes, an anode and a cathode, and an electrolyte respectively an electrolyte membrane that is arranged between the electrodes. At the anode a catalyst oxidizes the fuel, usually hydrogen, turning the fuel into a positively charged ion and a negatively charged electron. The electrolyte is a substance specifically designed, so ions can pass through it, but the electrons cannot. The freed electrons travel through a wire creating the electric current. The ions travel through the electrolyte to the cathode. Once reaching the cathode, the ions are reunited with the electrons and the two react with a third chemical element, usually oxygen, to create water or carbon dioxide. The electrodes are coated with a catalyst that enables and/or accelerates the oxidizing and reduction processes etc. In a preferred embodiment, the supply unit consists of at least two supply channels adapted to supply the anodes of the at least two fuel cells with the fuel and the cathodes of the at least two fuel cells with the oxidizing agent. The flow directions of the supply channels for the anodes and the cathodes are preferably the same. Alternatively preferred the flow directions can also be opposed. So, the supply unit is just a hypernym for the at least two supply channels that are used to operate the fuel cells. Advantageously the supply unit comprises more than two supply channels, one for the fuel and one for the oxidizing agent: channels to transport the existing water are necessary for instance. Preferably, the supply unit also comprises means for cooling/warming up the fuel cell system etc. So, the term "supply unit" comprises all the components that can be necessary to make and keep a fuel cell running. Preferably, the supply unit is a part of the channel system. In other words, the channel system is an interconnection between the supply units and the inlet and/or outlet. It goes without saying that the inlet comprises means for supplying the cathodes and the anodes. In a preferred embodiment the inlet is connected to corresponding tanks, for example one tank for the fuel and another tank for the oxidizing agent etc. A cross section of the channel system can be preferably angular, round and/or circular. Of course the cross section does not have to be constant along the length of the channel system. In a preferred embodiment a cross section of the supply unit/supply channel is for example rectangular. A longer side of the rectangular cross section is preferably orientated to the direction of the electrolyte membrane. A reaction area of the fuel cell is built by a length of the longer cross section side of the fuel supply unit respectively the supply channel, a length of the anode (respectively the cathode) and the corresponding electrolyte membrane along the flow direction. As a consequence the shorter side of the rectangular cross section stands perpendicular to the electrolyte membrane. By this configuration a large reaction area can be provided parallel to the layer. In other words the supply channel does not have to be high in an orientation perpendicular to the layer. The arrangement of at least two fuel cells can be described as the layer. On the other hand, the layer can as well be defined as a plate made of plastics or metal the fuel cells are arranged on. In this case, the purpose of the layer is to form a structure on which the fuel cells, the electrolyte etc. can be arranged on. Preferably, each fuel cell consists of an anode, an electrolyte and a separate electrolyte membrane. This embodiment is especially preferred for high efficiencies for example concerning the fuel usage. Alternatively preferred other embodiments are conceivable, for example an embodiment of at least two fuel cells that are connected by a common electrolyte membrane. In a preferred embodiment the layer has a planar extension. Of course, in reality an embodiment with more than at least two fuel cells is preferred. Advantageously a plurality of fuel cells is arranged in a column along the layer. In another embodiment there may be arranged a plurality of the columns next to another on the layer. It is always an objective to install high power in small places, so it goes without saying that on the layer there should be installed as many fuel cells as possible. The important aspect is that in the column of fuel cells the fuel cells are arranged one after another following the supply unit and as a consequence following the flow direction. The main reason is the following. The reactions described above take place for example at a specific position of the fuel cell. The reactants (for example in the fuel and in the oxidizing agent) have partial pressures. So, if a chemical reaction takes place, for example at the specific position of the fuel cell, a specific amount of the reactants is used up. So the concentrations of these reactants drop. According to the Nernst equation the cell voltage is proportional to a logarithmic function of the reactants partial pressures. The outcome of this is that, if the partial pressures of reactants drop, the operating voltage of the cell also drops. So at a second place of the fuel cell along the flow direction, the concentration is again lower than before which results in a lower voltage and so on. As a consequence there will be internal currents in the electrodes due to the different voltages. The efficiency drops. Furthermore reverse reactions will occur in supply channels closer to the outlet. The fuel cell will work partially as an electrolytic cell. It's the same as if batteries with different voltages are connected in parallel. In this case the battery with lower voltage will be charged from the battery with higher voltage. So, one of the most important features of the invention is that the at least two fuel cells, in a consequence the electrodes of the fuel cells, are as short as possible along the direction of the at least one supply unit respectively the flow direction. The small fuel cells have decreasing voltages along the reactant flow, as fuel and oxidant are partially used up in every cell and thus partial pressure of reactants drops after passing from one cell to the next. If cells with different voltages are connected in parallel then cells with higher voltage will "feed" energy to cells with lower voltage, thus wasting energy. That is why the small cells are connected in series, in groups (stacks along the columns). So, the described disadvantages concerning the internal currents due to the different voltages cannot exist because the electrodes are electrically separated. In other words there exists a plurality of small fuel cells where one big fuel cell has been provided before. So the whole active surface of the electrodes is divided in sections which in fact act as smaller fuel cells. Because the length of one fuel cell along the flow direction is so short, the voltage differences along the flow direction due to different partial pressures in one fuel cell are very small. Internal currents in the electrodes can be reduced to a very large extent by this configuration. Preferably, a plurality of layers is provided one upon another, wherein the supply units of the layers are connected in such a manner that reactant media can flow in series from one layer to another and/or to the outlet. Advantageously the fuel and the oxidizing agent can flow in a direct way to each layer coming from the inlet. In other words the layers are perfused simultaneously in a direction from the inlet to the outlet. It can be very advantageous that reactant media can be guided directly to the outlet, for example if the fuel is already used up or the partial pressure of the fuel is already very low because of being a special fuel for example made of natural gas etc. This can increase the efficiency significantly. On the other side, if the fuel is guided from one layer to the next the fuel can be used up and is not only pumped in a circle. It is without saying that the parallel and the serial guiding methods can be mixed. So, this arrangement makes it possible to use only specific layers of the fuel cell system, for example, depending on a power target value. It is a further advantage that a layer that is for example damaged (for example polluted or due temperature problems) can be in a way switched off by guiding no fuel through it. By switching off layers that are not used pumping losses from a pump or a compressor that are necessary to generate the flow of reactant media can be reduced. The reactant media can also move in a circle. In other words it can be conducted through a layer it has already been before. If inflow of fuel is reduced, fuel cells respectively layers near the outlet should be switched off, as fuel will be used up before it reaches them. In standard fuel cell systems known from the prior art areas near the outlet work in reverse - as electrolytic cell - and areas near the inlet work harder. This means better efficiency at load, lower than optimal. The power management unit can preferably draw more current from cells in the middle or near the outlet, equalizing the power contribution from all cells. The working surface can be used more equally.

In a preferred embodiment, the at least two fuel cells of one layer are connected by a common electrolyte membrane. Advantageously, the common electrolyte membrane can be used as the layer. This can reduce the costs and simplify the fuel cell system significantly. It goes without saying that every type of electrolyte known from the prior art can be used. Of course, if the electrolyte membrane is used as the layer, it has to have certain stability and resistance. In a preferred embodiment a plurality of electrodes can be arranged in such a way that on both sides of the electrolyte membrane a plurality of fuel cells is built. A preferred embodiment of the fuel cell systems utilizes the electrolyte membrane as the layer. Advantageously the layer has about a rectangular or quadratic form, one side of the rectangle or the square following the supply unit, another side of the rectangle or the square is in consequence perpendicular to the supply unit. In a preferred embodiment the electrodes (anodes and cathodes) have about a rectangular form. The longer side of the rectangular formed electrode is perpendicular orientated to the direction of the supply unit. Especially preferred the longer side of the rectangular formed electrode is perpendicular orientated to a plurality of supply units that are parallel arranged on the layer. The shorter side of the electrode that is of course orientated along the direction of the supply unit - in others words of the flow direction(s) - is significantly shorter than the longer side. Preferably the length of the shorter side is in a range of 0.5 to 20 mm, especially preferred in a range of 0.8 to 15 mm, exceptionally preferred in a range of 0.9 to 10 mm. Now, following the flow direction, preferably a plurality of electrodes is arranged one after another. Of course, there can be arranged as many electrodes as possible on the layer, respectively the electrolyte membrane, until an end of the layer, respectively the electrolyte membrane, is reached. It goes without saying that the layer respectively the electrolyte membrane does not have to have an orthogonal design. It can be round and/or triangular and so on.

In an advantageous manner, the at least two fuel cells of one layer are electrically connected in series along the at least one supply unit, wherein at least one fuel cell can define a stack. The at least two fuel cells of one layer can be divided in stacks respectively groups. All cells in one stack/group are connected in series along the at least one supply unit in a preferred embodiment. Connected in series, fuel cell voltages can be summed. This technique, known as fuel cell "stacking", permits fuel cell systems to meet any arbitrary voltage requirement. However, the fuel cells in the layer are not stacked vertically, but planar. In planar configurations, cells are connected laterally rather than vertically. The number of fuel cells connected in series in one stack can vary from 2 to all cells contained in one layer. So, the fuel cells of the layer are connected laterally, the different layers are arranged vertically. The connections between the fuel cells are made by wires made of suitable materials as for example copper. The connection in series means that, following the flow direction along the supply unit, an anode of a fuel cell is connected with a cathode of a next fuel cell. The cathode of that fuel cell is connected with an anode of a next fuel cell and so on.

In an advantageous embodiment in a layer a plurality of fuel cells is arranged in a column-by-column and a line-by-line design, wherein the arrangement of at least two fuel cells in series along the at least one supply unit represents a column, wherein each fuel cell that is arranged in series along the at least one supply unit represents a line. So, in a preferred embodiment, every new line has an extra anode, an extra cathode and an extra electrolyte membrane etc. By this way, the areas of the electrodes or the electrolyte membrane can be used to full capacity. It is a main feature to build a high plurality of lines along the supply unit with a minimal length along the supply unit to avoid internal currents. In an alternatively preferred embodiment, there is only one supply unit intended for the layer. So the supply unit respectively the column is as broad as the electrolyte membrane respectively the layer. Along the supply unit, the column is of course also separated into as many lines as possible.

Expediently, the channel system comprises at least one pressure equalization unit that is adapted as an interconnection between different supply units of one layer, especially as the interconnection between different supply channels, wherein the at least one pressure equalization unit is arranged before and/or after each line of fuel cells. Preferably the at least two fuel cells are arranged along a plurality of supply units, that are arranged approximately parallel, wherein for each type of electrode (anode and cathode) a plurality of supply channels is interconnected by a pressure equalization unit. As it is already said at least two fuel cells can be arranged in series along the at least one supply unit. Of course, also at least two fuel cells are arrangeable in series along a plurality of supply units respectively supply channels. The plurality of supply units describes a column, consisting of at least two fuel cells with a separate electrolyte membrane. Every fuel cell along the column describes a line and as a consequence there is a separate electrolyte membrane for each new line. Alternatively preferred at least two fuel cells, respectively lines, are connected by a common electrolyte membrane. The plurality of supply units/supply channels is in general approximately parallel orientated. Before entering every (new) fuel cell, the pressure in the channel system (respectively the supply units) is equalized in slightly larger transverse or perpendicular channels. In this way, the reactant media pressure is fairly equal in all the parallel arranged supply units/supply channels. As reactant media pass through the fuel cell, the reactant media is partially used and the partial pressures of reagents drop. It is vital that the length of the fuel cells along the flow direction along the supply unit(s) is minimal. In this way, the reactant pressure drop from entry to exit in one fuel cell will be kept to a minimum and so, the internal current in one single cell will be kept to a minimum. The pressure equalization unit has preferably a tubular form with a rectangular and/or round and/or a circular cross section. In a preferred embodiment the supply channels that are connected with the pressure equalization unit have different cross sections. For example in a preferred embodiment the supply units that are arranged in a middle part of the pressure equalization unit have a (circular) cross section that is smaller than (circular) cross sections of supply units on the outer sides of the pressure equalization unit. In other words the flow resistances of the supply channels are adapted to ensure a similar flow through all supply channels. In a preferred embodiment the first pressure equalization unit of each layer (following the flow direction of reactant media) has another configuration concerning its inputs. In general one bigger channel that comes from the channel system goes into the first pressure equalization unit. From there a plurality of supply channels goes out. For the last pressure equalization unit in one layer (following a flow direction of reactant media) the opposite counts. A plurality of supply channels goes into the pressure equalization unit, one bigger channel goes out. It is without saying that both, the supply channels of the electrodes and the supply channels of the anodes, have preferably at least one pressure equalization unit. In an alternatively preferred embodiment the described arrangement ist combined with the already described column by column design. So it is also possible, to connect different colums with the pressure equalization unit.

In a preferred manner, the channel system contains a distribution unit that is adapted to distribute the flow of reactant media, wherein the distribution unit forms an interconnection between the layers among themselves and with the inlet and/or with the outlet. Preferably, the distribution unit makes it possible that the reactant media can flow from one layer to another. The other layer does not have to be the next layer in a spatial way. It can be one of the layers of the plurality of layers. Of course, the distribution unit can be integrated in the channel system so that no extra channels are required. In other words, the channel system can contain the functionality of the distribution unit. For this purpose the channel system can preferably be double-walled. By this configuration the distribution system can be arranged "in" the channel system more or less invisible. In a preferred embodiment, the distribution unit is represented by a plurality of channels that interconnect the layers among themselves and with the inlet and/or with the outlet. In general the channel system and the supply units and the distribution unit do not have to be built as "extra" channels. The channel system etc. can also be a part of surrounding components or parts. In other words the channel system can be built by undercuts or recesses of the surrounding components or parts.

Advantageously, the distribution unit contains at least one valve for each layer to regulate the flow of reactant media to each layer respectively for each layer. With the valve, it can be controlled whether reactant media can flow to or in a layer or not. If there is a valve at the entrance and the exit of a layer, it could also be possible to let reactant media flow in but not let it flow out, for example. So there is given a lot of possibilities to control the flow for and in each layer. Advantageously, there is the possibility to "close" a layer. It can be very useful for example, if it is destroyed or if it has to be repaired or something like this. Another aspect is that a layer can be switched off if there are temperature problems. In a preferred embodiment, at least one valve is integrated into the channel system. Furthermore advantageously there can be the valve for every supply unit. In this case every column of fuel cell is switchable.

In a preferred manner, a power management unit is adapted to operate the fuel cell system, wherein the power management unit contains a control unit that is adapted to control the flow of reactant media for each layer. Preferably, the control unit is directly connected with at least one of the valves. Advantageously, the power management unit has an electrical connection with each fuel cell of the fuel cell system. Further advantageously, the fuel cell system consists of an interface that provides a connection with the inlet(s) and/or with the outlet(s). So it is possible to check for example the partial pressures of the reactant media with the interface which preferably has respective sensors etc. If the fuel usage is for example bad respectively the partial pressure of the fuel is still very high at the outlet, the power management can recognize it via the interface and adapt the operating method of the fuel cell system.

In an advantageous manner, each stack of fuel cells or each single fuel cell is independently electrically connected with the power management unit. In this case the fuel cells are not electrically connected in series, forming stacks. The power management unit is adapted to handle the voltages and currents of each single fuel cell or stack of cells, when stacking is used. So there is a very high variability concerning the voltage and, in general, the power of the fuel cell system. Preferably, only these fuel cells are interconnected which have the same voltage level.

According to the invention, a method for operating a fuel cell system comprises the following steps:
- providing at least one supply unit and arranging at least two fuel cells along the at least one supply unit to form a layer;
- providing at least one further layer with the at least one supply unit and at least two fuel cells that are arranged along the at least one supply unit;
- connecting the supply units with an inlet and an outlet and among themselves to form a channel system;
- controlling a flow of reactant media in the channel system by a control unit of a power management unit;
- connecting the power management unit electrically with the fuel cells;
- comparing an electrical power of the fuel cell system with an electrical power target value in a comparator of the power management unit and tuning the electrical power of the fuel cell system for controlling the flow of reactant media through the different layers of the fuel cell system;
- tuning individually all electrical currents, drawn from every single fuel cell or stack of fuel cells.

Another important step can be: combining and transforming the power, drawn from all stacks/cells to desired target values of voltage, frequency, number of phases by applying known semiconductor means. The target value can be a specific power level (measured in watt) that has to be reached by the fuel cell system. Furthermore it can also be a specific voltage level or electricity level. By building the channel system a high variability is provided to operate the fuel cell system. To increase a fuel utilization ratio the supply method can be for example serial. In this case the partially used fuel from one layer is fed to the next layer to be used further. This supply method is preferably efficient at low loads, as the fuel utilization ratio will be better, compared to parallel method. At higher loads the fuel will be used up early by the first layers and the last layers will starve for fuel. So, it is very useful to switch off the last layers. For the tuning of the electrical power preferably respective sensors exist, to recognize the state of the fuel cell system as for example the partial pressures of components of the reactant media etc. In combination with the control unit and the interface(s) preferably a closed loop control is built up. In this way the closed loop control acts quasi as the comparator. It goes without saying that features of the fuel cell system according to the invention are also valid for the method of operating the fuel cell system according to the invention and the other way round.

Additional advantages and features of the current invention are shown in the following description of preferred embodiment of the current invention with reference to the attached drawings. Single features are characteristics of respective embodiments are explicitly allowed to be combined with the scope of the current invention.
- Figure 1:: shows a first preferred embodiment of a fuel cell system in a perspective view;
- Figure 2:: shows a side view of a preferred embodiment of a layer;
- Figure 3:: shows a plan view of a preferred embodiment of a layer;
- Figure 4:: shows an electrical scheme of a preferred embodiment of a layer;
- Figure 5a:: shows an electrical scheme of a preferred embodiment of multiple layers;
- Figure 5b:: shows an electrical scheme of a preferred embodiment of multiple layers with a separate electrolyte membrane for every fuel cell;
- Figure 5c:: shows an electrical scheme of a preferred embodiment of a direct connection of cells to a power management unit;
- Figure 6:: shows a preferred embodiment of a parallel reactant supply;
- Figure 7:: shows a preferred embodiment of a serial reactant supply;
- Figure 8a:: shows a preferred embodiment of a switchable reactant supply;
- Figure 8b:: shows a preferred embodiment of a switchable reactant supply with a separate electrolyte membrane for every fuel cell;
- Figure 9a:: shows a preferred embodiment of a switchable reactant supply switched to maximal fuel efficiency;
- Figure 9b:: shows the preferred embodiment of a switchable reactant supply with a combination of serial and parallel supply;
- Figure 9c:: shows the preferred embodiment of a switchable reactant supply with two layers that are switched off;

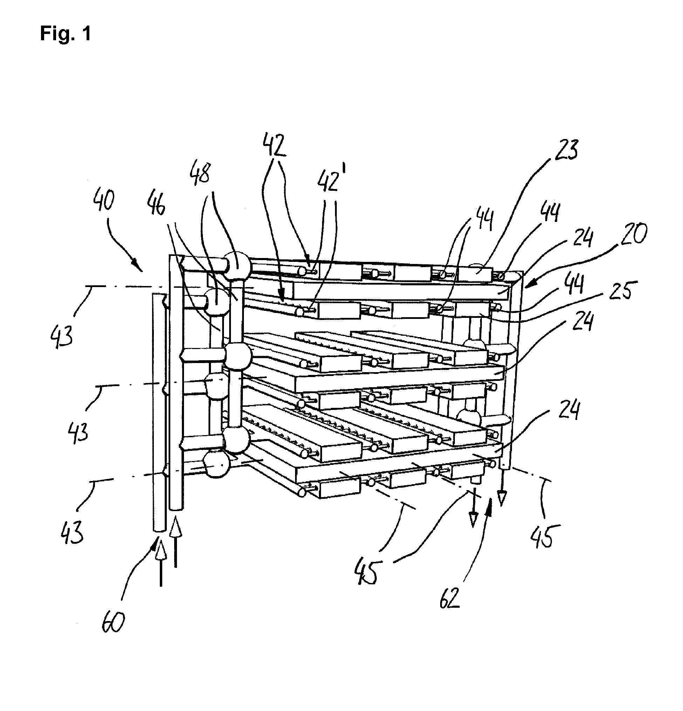

Fig. 1 shows a first preferred embodiment of a fuel cell system in a perspective view. The fuel cell system comprises three layers 20, at which each layer 20 comprises three fuel cells 22. In each layer 20, three fuel cells 22 are arranged in one column 43. Perpendicularly to the column 43, lines 45 are orientated. In other words, the column 43 of each layer 20 forms one supply unit 42 for each layer 20. The supply unit 42 consists of supply channels 42' for supplying anodes 23 and cathodes 25. Preferably the supply units 42 consist of means for cooling/warming up the fuel cells 22 and for conducting the existing water etc. These components are not shown in Fig. 1. The columns 43 respectively the supply units and its supply channels 42' of each layer 20 are interconnected by a pressure equalization unit 44. Before reactant media is guided by a channel system 40 and from an inlet 60 to each layer 20, it passes valves 48. Valves 48 and the supply units 42 are interconnected by the distribution unit 46. Reactant media can be conducted in a direction of an outlet 62. Reactant media can also flow from the upmost layer 20 to the middle layer 20 and from there via the layer 20 at the very bottom to the outlet 62. Of course it is also possible that reactant media flows, coming from the inlet 60, directly to the layer 20 in the middle and/or to the layer 20 at the very bottom. The different flow designs are of course also mixable.

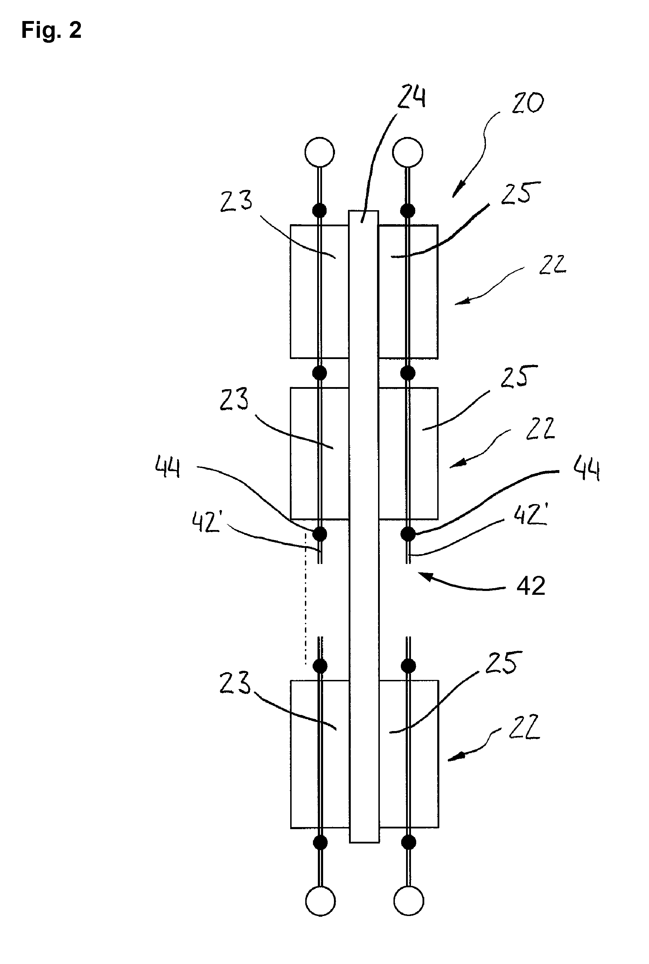

Fig. 2 shows a preferred embodiment of a layer 20 in a side view. In other words the view is directed parallel to the layer 20. In the middle of Fig. 2, one can see an electrolyte membrane 24. The electrolyte membrane 24 constitutes with at least three anodes 23 and at least three cathodes 25 at least three fuel cells 22. In other words, as can be seen in Fig. 2, a column 43 of fuel cells 22 with at least three lines 45 of fuel cells 22. Along the column 43 of fuel cells 22 on each side of the electrolyte membrane 24, supply units 42 consisting of supply channels 42' are arranged. It is shown that both, the supply channel 42' on the anode side and the supply channel 42' on the cathode side, are interconnected with corresponding other supply channels 42' (not displayed) by pressure equalization units 44. It goes without saying that the layer 20 also comprises a cooling system and further supply channels 42'.

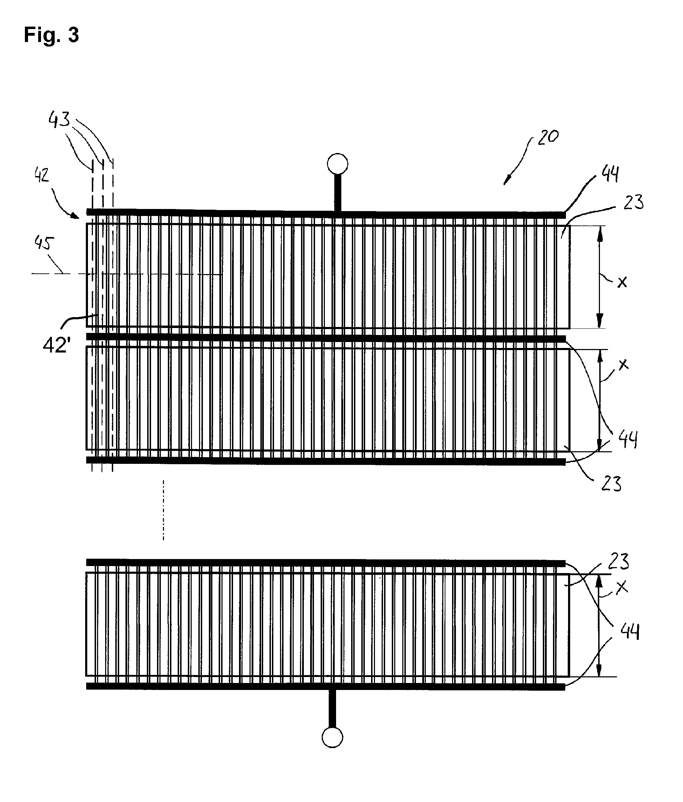

Fig. 3 shows a plain view of a preferred embodiment of a layer 20. Three anodes 23 are shown, each with a length x along the orientation of supply units 42 that consist of supply channels 42'. Of course, preferably the length x of cathodes 25, not visible in Fig. 3, is the same as the length x of the anodes 23. Actually, a plurality of supply units 42 is arranged in columns 43 in the preferred embodiment. The supply units 42 respectively the supply channels 42' are interconnected by pressure equalization units 44. After each pressure equalization unit 44, a new line 45 of fuel cells 22 begins. As it is shown in Fig. 3, the pressure equalization units 44 can be arranged before and after fuel cells 22.

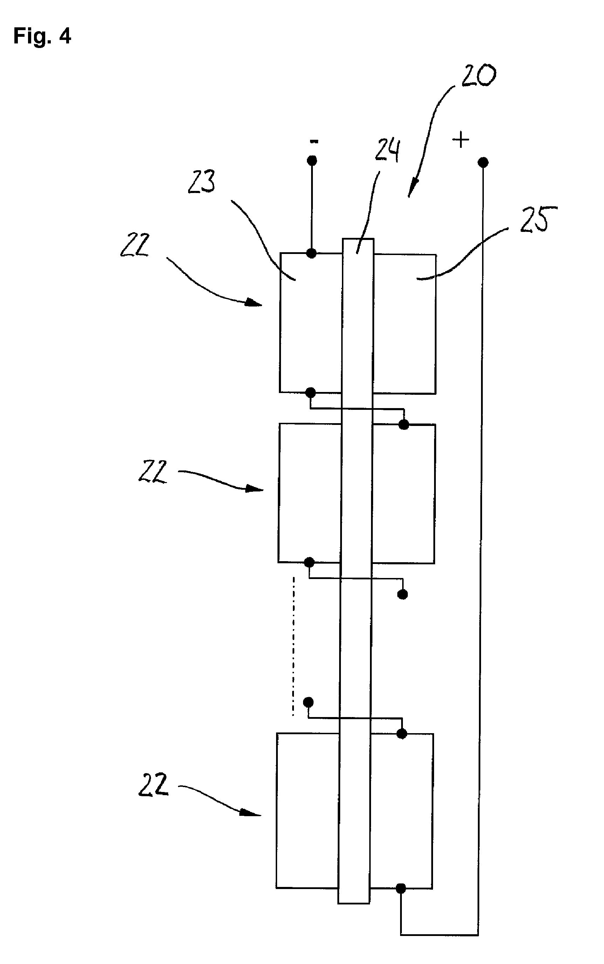

Fig. 4 shows an electrical scheme of a layer 20 of a preferred embodiment of a fuel cell system. Three fuel cells 22 are shown that are connected in series (stack) along an electrolyte membrane 24. This means always an anode 23 of one fuel cell 22 is connected with a cathode 25 of a next fuel cell 22.

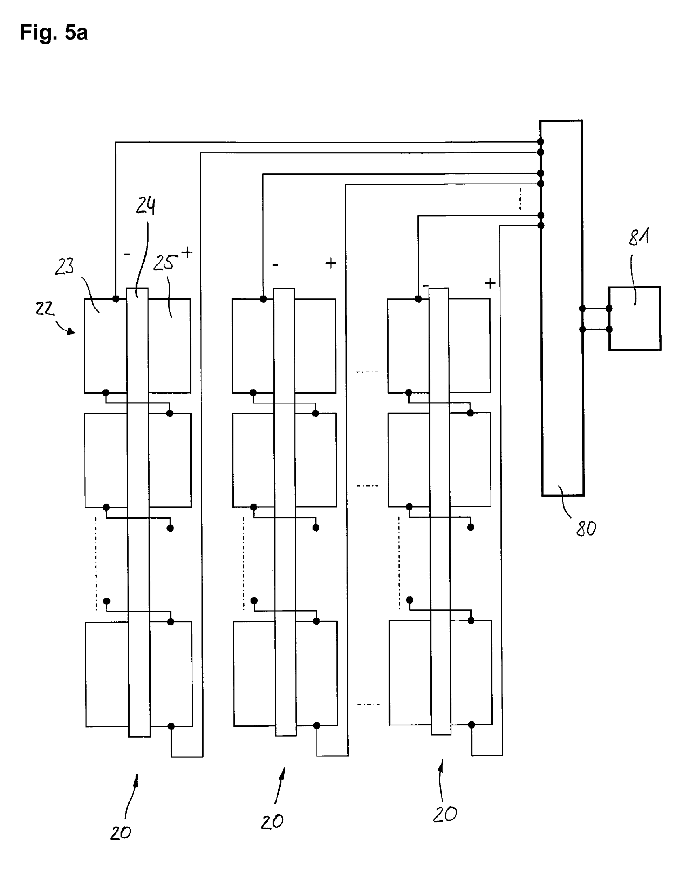

Fig. 5a shows an electrical scheme of multiple layers 20 of a preferred embodiment of a fuel cell system. Actually, Fig. 5a shows three layers 20. Cells in each of the three layers 20 are connected in a stack and each of the three stacks is interconnected to the power management unit 80. Each of the layers 20 is interconnected with the power management unit 80. Each of the layers 20 comprises at least three fuel cells 22 which comprise an anode 23 and a cathode 25 that are arranged at an electrolyte membrane 24.

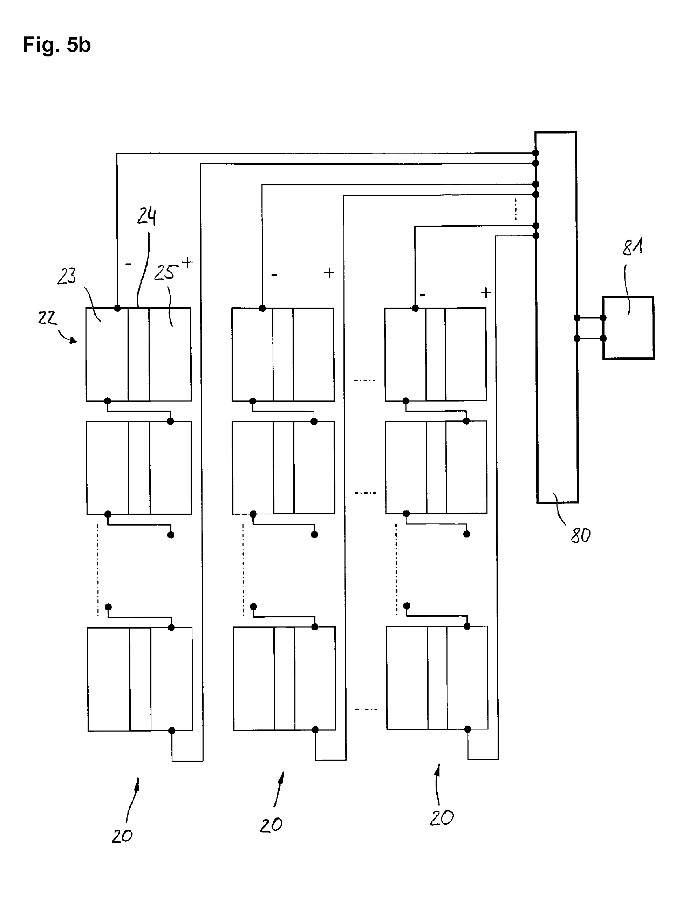

Fig. 5b shows an electrical scheme of a preferred embodiment of multiple layers with a separate electrolyte membrane for every fuel cell. Apart from this, the structure is the same as in Fig. 5a.

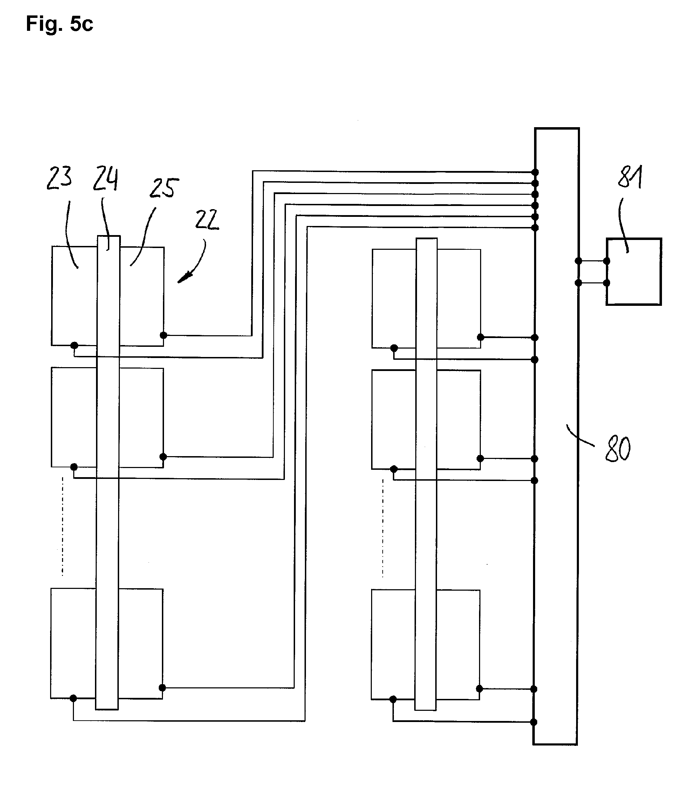

Fig. 5c shows another preferred electrical scheme of multiple layers 20 where all cells are interconnected directly to the power management unit 80.

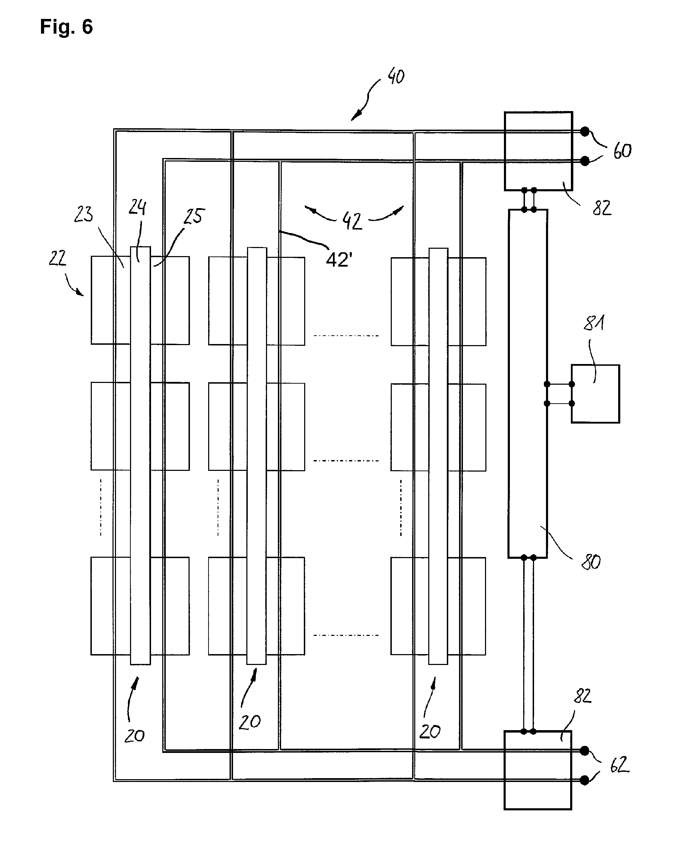

Fig. 6 shows a preferred embodiment of a channel system 40 of a preferred embodiment of a fuel cell system. The electrical connections are not shown in Fig. 6. Each layer is supplied by supply units 42 consisting of supply channels 42'. The supply units 42 are part of the channel system 40. The channel system 40 comprises two inlets 60 and two outlets 62. The supply units 42 respectively the supply channels 42' supply the fuel cells 22 and especially the electrodes with fuel and oxidizing agent. The whole channel system 40 is interconnected by interfaces 82 with the power management unit 80. The layers 20 are supplied in a parallel way. The supply units 42 go straight from the inlets 60 over the layers 20 to the outlets 60. As one can see, a parallel arrangement of the supply units 42 represents a very short interconnection between the inlets 60 and the outlets 62.

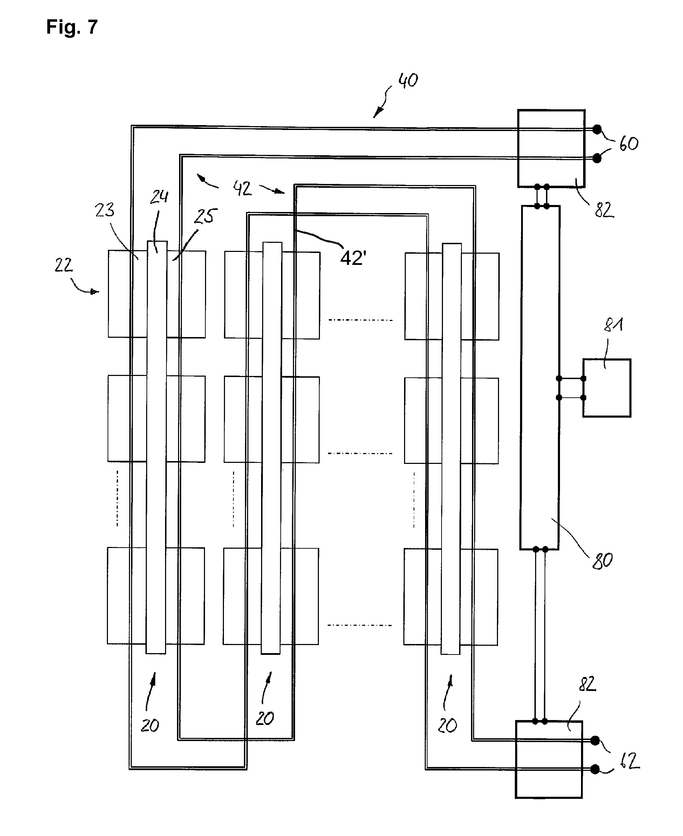

In contrast, Fig. 7 shows a preferred embodiment of a fuel cell system and a serial supply of different layers 20. Each layer 20 comprises fuel cells 22. Each fuel cell 22 comprises an anode 23 and a cathode 25. The fuel cells 22 are arranged along an electrolyte membrane 24. If reactant media comes from inlets 60 via the channel system 40 and supply units 42 respectively supply channels 42' to one layer 20, it does not go directly to the outlets 62, but to the next layer 20. So in opposite with the parallel flow, the way the reactant media has to pass between the inlets 60 and the outlets 62 is much longer. Consequently, the fuel usage is much better. As it is already known, the channel system 40 is controlled by a power management unit 80 comprising a control unit 82. It is further connected by interfaces 82 that make a controlling possible.

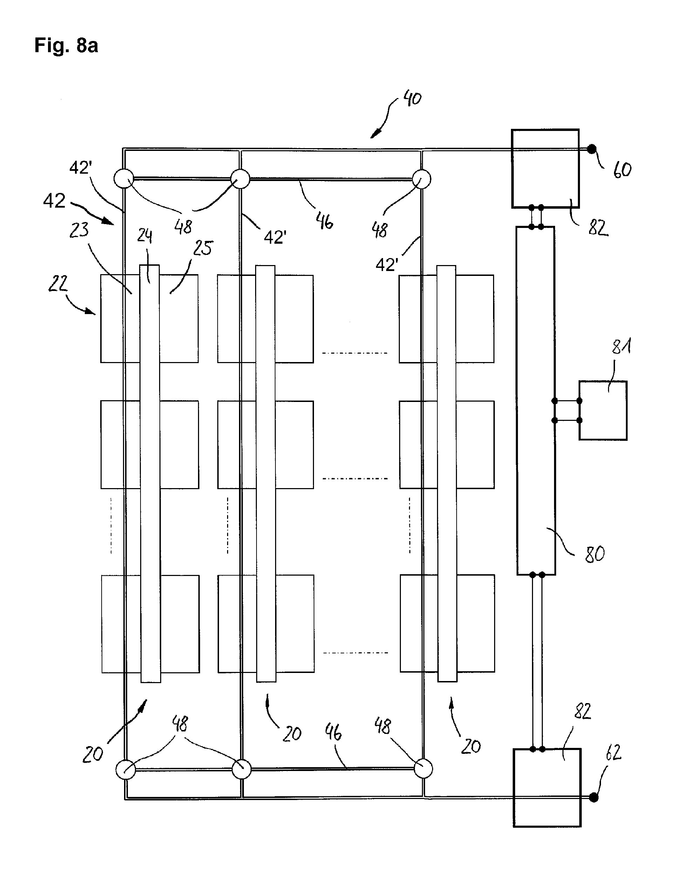

Fig. 8a shows a preferred embodiment of a fuel cell system with a distribution unit 46. For simplicity, only supply channels 42' respectively supply units 42 for fuel are depicted. The distribution unit 46 contains a valve 48 for each layer 20. This configuration allows switching between parallel and serial supply methods. To control the different methods, a power management 80 is adapted which comprises a control unit 81 and interfaces 82 which are adapted to control the valves 48.

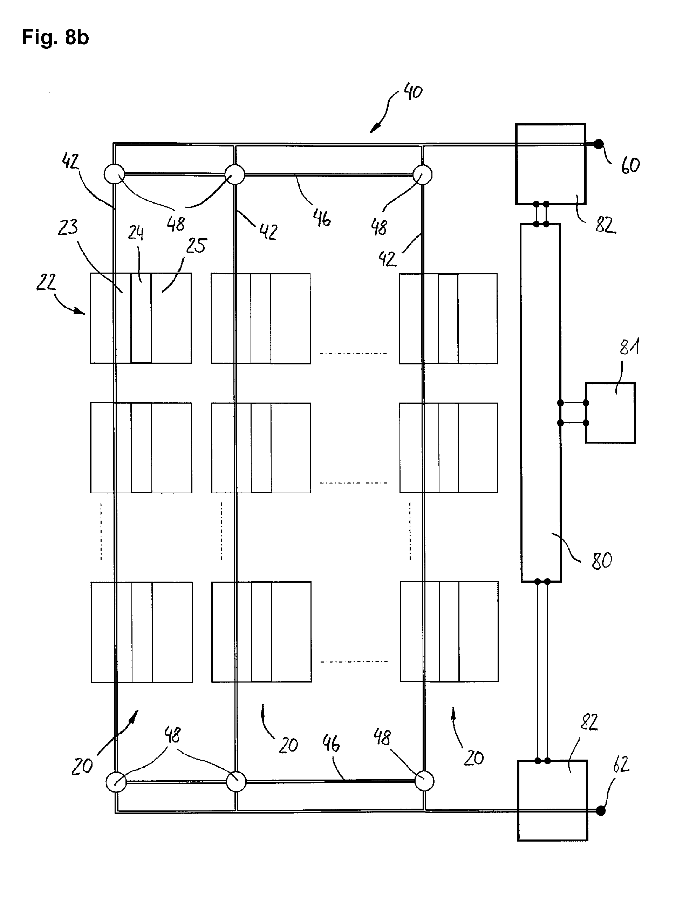

Fig. 8b shows a preferred embodiment of a switchable reactant supply with a separate electrolyte membrane for every fuel cell. Apart from this, the structure is the same as in Fig. 8a.

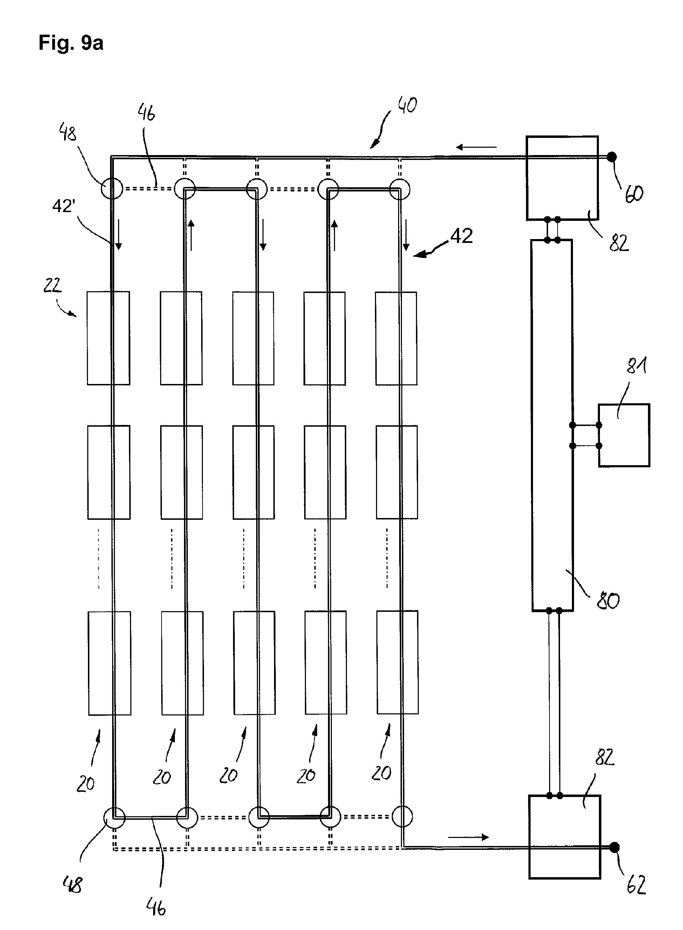

Fig. 9a shows a preferred embodiment of a fuel cell system with a distribution unit 46 which comprises a valve 48 for each layer 20. Only the supply units 42 respectively the supply channels 42' for the fuel are depicted. Parts of a channel system 40 that are not used are shown in dotted lines. Thus, a serial supply method is possible by using the distribution units 46 and the valves 48. To control the supply method, a power management unit 80 with a control unit 81 and interfaces 82 are adapted. The supply method as it is shown in Fig. 9a is adapted for maximum fuel efficiency.

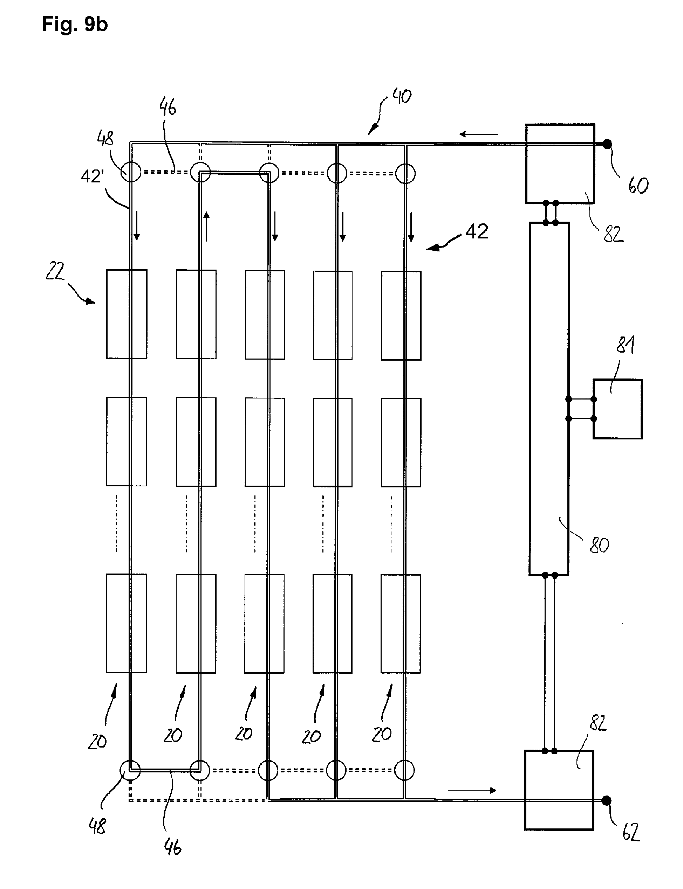

Fig. 9b shows the same preferred embodiment as it is shown in Fig. 9a. In opposite to Fig. 9a the valves 48 work in a different way. So it is a kind of a combined serial and parallel supply method.

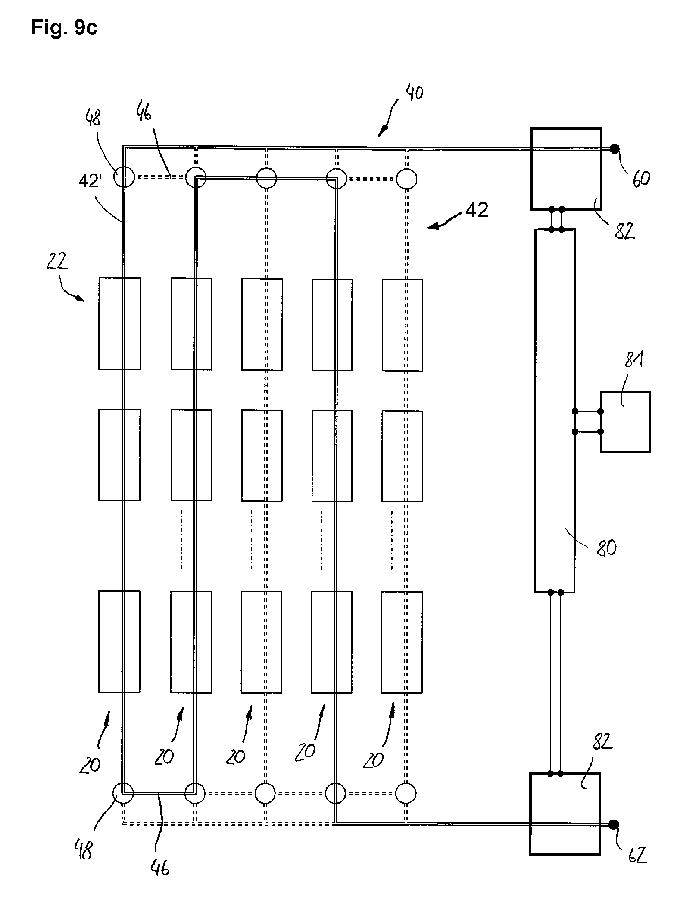

Fig. 9c shows the same preferred embodiment as it is shown in Fig. 9a and 9b. The valves 48 are controlled in such a way that two supply units 42 are not used, so the third and the fifth layer 20 (counted from the left in Fig. 9c) are not used.

### Reference numerals:

- 20: layer
- 22: fuel cell
- 23: anode
- 24: electrolyte membrane
- 25: cathode
- 40: channel system
- 42: supply unit
- 42': supply channel
- 43: column of fuel cells
- 44: pressure equalization unit
- 45: line of fuel cells
- 46: distribution unit
- 48: valve
- 60: inlet
- 62: outlet
- 80: power management unit
- 81: control unit
- 82: interface
- x: length of an electrode

## Claims

1. Fuel cell system, comprising
a plurality of layers (20) and a channel system (40),
wherein each layer (20) contains at least two fuel cells (22),
wherein the channel system (40) contains at least one supply unit (42) that is attributed to each layer (20),
wherein the supply unit (42) is adapted to supply reactant media to the at least two fuel cells (22) and to guide reactant media from an inlet (60) to an outlet (62),
wherein the at least two fuel cells (22) are arranged in series along the at least one supply unit (42) and
wherein the supply units (42) of the layers (20) are connected in such manner that reactant media can flow in series from one layer (20) to another and/or to the outlet (62).

2. Fuel cell system according to claim 1,
wherein the at least two fuel cells (22) of one layer (20) are connected by a common electrolyte membrane (24).

3. Fuel cell system according to claim 1 or 2,
wherein the at least two fuel cells (22) of one layer (20) are electrically connected in series along the at least one supply unit (42),
wherein at least one fuel cell (22) can define a stack.

4. Fuel cell system according to any of the preceding claims,
wherein in a layer (20) a plurality of fuel cells (22) is arranged in a column by column and a line by line design, wherein the arrangement of at least two fuels cells (22) in series along the at least one supply unit (42) represents a column (43) and wherein each fuel cell (22) that is arranged in series along the at least one supply unit (42) represents a line (45).

5. Fuel cell system according to claim 4,
wherein the channel system (40) comprises at least one pressure equalization unit (44) that is adapted as an interconnection between different supply units (42) of one layer (20),
wherein the at least one pressure equalization unit (44) is arranged before or after each line (45) of fuel cells (22).

6. Fuel cell system according to any of the preceding claims,
wherein the channel system (40) contains a distribution unit (46) that is adapted to distribute the flow of reactant media, wherein the distribution unit (46) forms an interconnection between the layers (20) among themselves and with the inlet (60) and/or with the outlet (62).

7. Fuel cell system according to claim 6,
wherein the distribution unit (46) contains at least one valve (48) for each layer (20) to regulate the flow of reactant media to each layer (20).

8. Fuel cell system according to any of the preceding claims,
comprising a power management unit (80) that is adapted to operate the fuel cell system, wherein the power management unit (80) contains a control unit (81) that is adapted to control the flow of reactant media for each layer (20).

9. Fuel cell system according to claim 8,
wherein each stack of fuel cells (22) or each single fuel cell (22) is independently electrically connected with the power management unit (80).

10. A method for operating a fuel cell system,
comprising the following steps:
- Providing at least one supply unit (42) and arranging at least two fuel cells (22) along the at least one supply unit (42) to form a layer (20);
- Providing at least one further layer (20) with at least one supply unit (42) and at least two fuel cells (22) that are arranged along the at least one supply unit (42);
- Connecting the supply units (42) with an inlet (60) and an outlet (62) and among themselves to form a channel system (40);
- Controlling a flow of reactant media in the channel system (40) by a control unit (81) of a power management unit (80);
- Connecting the power management unit (80) electrically with the fuel cells (22);
- Comparing an electrical power of the fuel cell system with an electrical power target value in a comparator of the power management unit (80) und tuning the electrical power of the fuel cell system by controlling the flow of reactant media through the different layers (20) of the fuel cell system;
- Tuning individually all electrical currents, drawn from every single fuel cell (22) or stack of fuel cells (22).
